Europäisches Patentamt

European Patent Office

Office européen des brevets

(11) Veröffentlichungsnummer: **0 064 179**
**B1**

# (12) EUROPÄISCHE PATENTSCHRIFT

(45) Veröffentlichungstag der Patentschrift :
13.03.85

(21) Anmeldenummer : 82103107.7

(22) Anmeldetag : 13.04.82

(51) Int. Cl.⁴ : **B 65 G 47/52**, B 65 G 1/04,
B 65 G 65/00

(54) Übergabeeinrichtung für Paletten und ähnliche Stückgüter.

(30) Priorität : 05.05.81 CH 2901/81

(43) Veröffentlichungstag der Anmeldung :
10.11.82 Patentblatt 82/45

(45) Bekanntmachung des Hinweises auf die Patenterteilung : 13.03.85 Patentblatt 85/11

(84) Benannte Vertragsstaaten :
AT BE DE FR GB IT NL SE

(56) Entgegenhaltungen :
DE-A- 1 963 043
FR-A- 2 435 416

(73) Patentinhaber : INVENTIO AG
Seestrasse 55
CH-6052 Hergiswil NW (CH)

(72) Erfinder : Helz, Ulrich
Staatsstrasse 94
CH-3044 Säriswil (CH)

## Beschreibung

Die Erfindung betrifft eine Uebergabeeinrichtung für Paletten und ähnliche Stückgüter, zwischen einem stationären Kettenförderer und einer Fördereinrichtung mit insbesondere rechtwinklig zur Förderrichtung des stationären Kettenförderers verlaufenden Förderbahn, wobei die Uebergabe mittels eines auf einem Transportfahrzeug angeordneten, quer zur Förderbahn der Fördereinrichtung begrenzt verfahrbaren, schienengebundenen Verschiebewagens erfolgt.

Derartige Uebergabeeinrichtungen dienen dazu, Förderlasten von einer Förderbahn an eine andere, rechtwinklig dazu angeordnete Förderbahn zu übergeben. Ueblicherweise werden dazu stationäre Kurzförderbahnen mit schienengebundenen Verschiebeeinrichtungen in Form von überkragfähigen und höhenverstellbaren Traggabeln, oder in Form von Verschiebehubwagen eingesetzt, wobei die Förderlasten von einer Förderbahn angehoben, zur andern Förderbahn gefahren und dort wieder abgesenkt werden.

Bei einer Paletten-Uebergabestation wie sie die DE-OS 24 19 943 beschreibt, dient als Uebergabeorgan eine solche schienengebundene und höhenverstellbare Traggabel, die unter die Palette fährt, diese von einem ortsfesten Kettenförderer abhebt, in ihren Schienen verfährt und auf den rechtwinklig zum ersten Kettenförderer angeordneten zweiten Kettenförderer absetzt.

Eine zweite, ähnliche Uebergabestation beschreibt die DE-OS 20 32 295. Als Uebergabeorgan dient hier ein schienengebundener Verschiebehubwagen, der unter die Förderlast fährt und sie aus einer Rollenförderbahn heraushebt, um sie nach kurzer Horizontalfahrt auf dem Verschiebehubwagen auf den rechtwinklig zur Rollenförderbahn angeordneten Kettenförderer wieder abzusetzen.

Mit der FR-PS 2 435 416 ist ein Verfahren und eine Vorrichtung zum Uebergeben von Fördergut von einem schienengebundenen, angetriebenen Rollenförderer auf einen als Lagerplatz ausgebildeten, stationären, antreibbaren Rollenförderer bekanntgeworden, bei welchen der stationäre Rollenförderer durch Reibungsschluss vom fahrbaren, angetriebenen Rollenförderer angetrieben wird. Der angetriebene Rollenförderer kann quer zur Fahrtrichtung des schienengebundenen Rollenförderers durch einen Stellzylinder, einen Spindelantrieb oder durch ein in eine fest am Wagen des angetriebenen Rollenförderers angeordnete Kette eingreifendes Kettenrad bis zum Reibungsschluss mit einem Antreiborgan des stationären, antreibbaren Rollenförderers zwischen Schienenstücken verfahren werden.

Die beiden ersten, bekannten Uebergabeeinrichtungen erfordern aufwendige Hubvorrichtungen um die Förderlast von der einen Förderbahn anzuheben und bei der anderen Förderbahn wieder abzusenken. Im weiteren benötigt jede Förderbahn die rechtwinklig zu einer anderen Förderbahn endet eine eigene Uebergabestation.

Die dazu erwähnten Nachteile fallen um so mehr ins Gewicht, wenn sehr viele Uebergabestellen in einer Förderanlage vorgesehen sind. Ein weiterer Nachteil dieser beiden Anlagen liegt darin, dass bei jeder Uebergabe mit Stillstandzeiten gerechnet werden muss, da die Förderlasten nur im Stillstand übernommen werden können.

Die dritte bekannte Uebergabeeinrichtung weist die Nachteile der beiden ersten Einrichtungen nicht auf, eignet sich aber nur für schienengebundene Transportfahrzeuge. Die für die nötige Reibkraft erforderliche Normalkraft zum Antreiben eines stationären Rollenförderers könnte von schienenfreien Transportfahrzeugen nur sehr schwer aufgebracht werden. Ein weiterer Nachteil dieser Uebergabeeinrichtung liegt darin, dass für die Bewegung des Verschiebewagens und zum Antreiben des Förderorganes des Verschiebewagens je eine separate Antriebseinheit erforderlich sind.

Der Erfindung liegt die Aufgabe zugrunde, eine Uebergabeeinrichtung vorzuschlagen, welche ohne weiteres in schienenfreien Transportfahrzeugen einsetzbar ist, und bei welcher für die Bewegung des Verschiebewagens und zum Antreiben des Förderorganes des Verschiebewagens ein einziger Antrieb genügt.

Diese Aufgabe wird durch die in den Ansprüchen gekennzeichnete Erfindung gelöst. Die durch die Erfindung erreichten Vorteile sind im wesentlichen darin zu sehen, dass unter Mithilfe einer wechselweise wirkenden Brems-Blockiervorrichtung alle Bewegungsfunktionen der Uebergabeeinrichtung des Transportfahrzeuges mit nur einer einzigen Antriebseinheit ausgeführt werden können, die Bewegungen der Förderketten des Kettenförderers des Verschiebewagens wie auch die Bewegung des Verschiebewagens selbst, und dass sich die Uebergabeeinrichtung speziell für schienenfreie Transportfahrzeuge eignet.

Auf beiliegenden Zeichnungen ist ein Ausführungsbeispiel der Erfindung dargestellt, welches im folgenden näher beschrieben ist. Es zeigen:

Figur 1 den Aufriss eines Transportfahrzeuges in Fahrtrichtung betrachtet, welches einen Aufbau in Form eines schienengebundenen Verschiebewagens mit einem Kettenförderer aufweist,

Figur 2 den zugehörigen Grundriss, und

Figur 3 den Schnitt A-A durch eine Brems-Blockiervorrichtung.

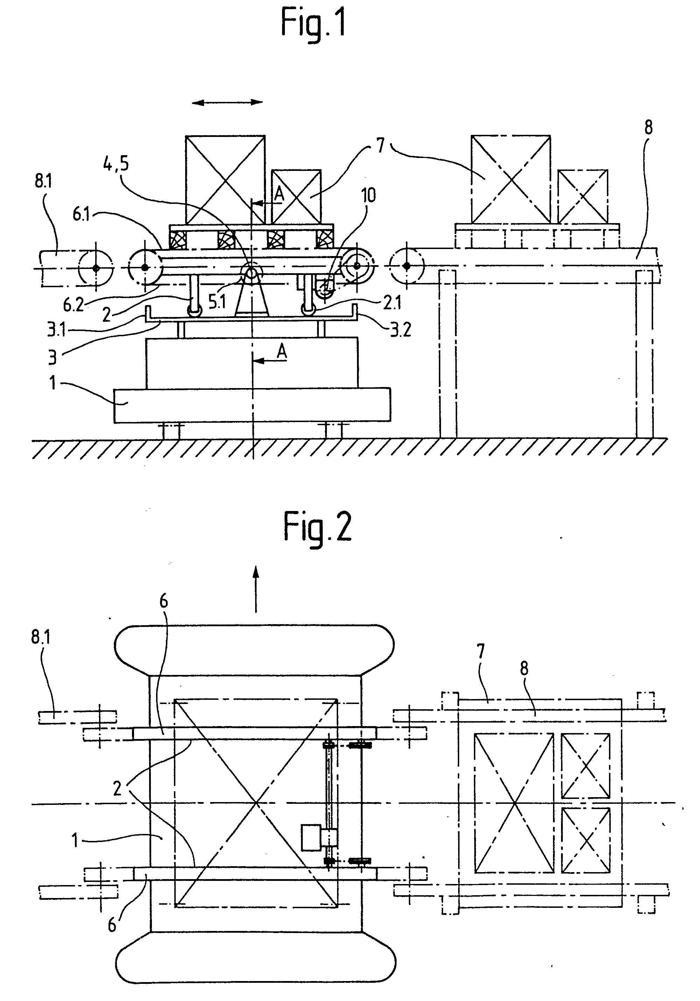

In den Figuren 1 und 2 ist mit 1 das Transportfahrzeug bezeichnet. Auf einer auf dem Transportfahrzeug 1 aufgebauten Verschiebewagenführung 3 ist der Verschiebewagen 2 mit Laufrollen 2.1 seitlich verfahrbar aufgelegt. Der Verschiebewagen 2 wird in den Endlagen der Verschiebewagenführung 3 durch Anschläge 3.1 und 3.2 in seiner seitlichen Bewegung nach links und nach rechts gesichert. Auf dem Verschiebewagen 2 ist der Kettenförderer 6 angeordnet, wobei Förderketten durch einen Kettenantrieb 10 angetrieben sind. Die endlosen Förderketten des Kettenförderers 6 bestehen je aus einem oberen Kettentrum 6.1 und einem unteren Kettentrum 6.2. Das obere Kettentrum 6.1 ist auf der ganzen Länge durch eine Kufe 2.2 des Verschiebewagens 2 unterstützt und trägt eine Förderlast 7. Für den Transport von Uebergabestelle zu Uebergabestelle sind die Förderketten und der Verschiebewagen 2 durch nicht speziell gezeichnete bewegliche Anschläge in der Mittellage gesichert und verriegelt.

Die Brems-Blockiervorrichtung 4,5 ist durch ein Kettenrad 5.1 mit dem unteren Kettentrum 6.2 verbunden. An den Uebergabestellen wird die Förderlast 7 vom Kettenförderer 6 des Verschiebewagens 2 an einen stationären Kettenförderer 8 oder 8.1 übergeben.

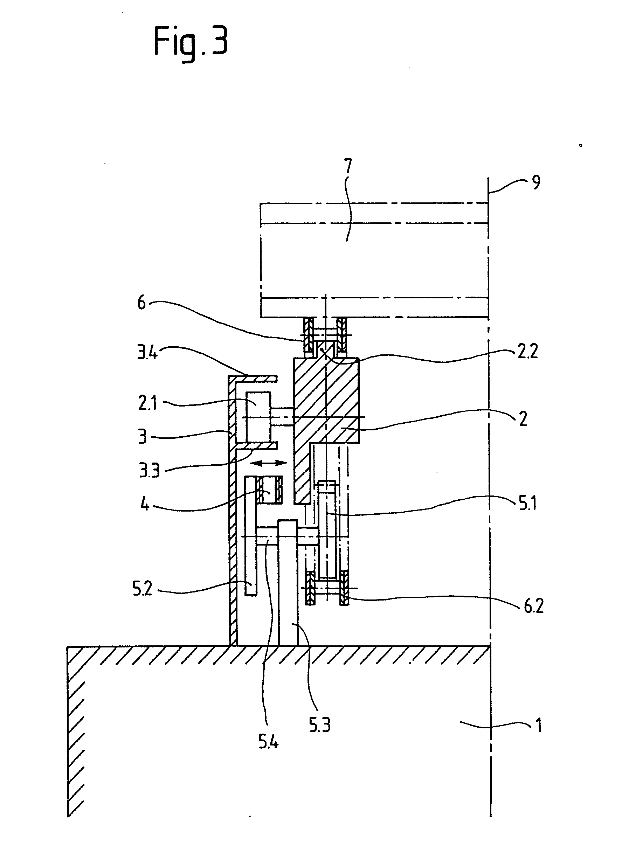

In Figur 3 ist mit Schnitt A-A prinzipiell die Brems-Blockiervorrichtung 4,5 dargestellt, wobei nur eine Hälfte des symmetrischen Verschiebewagens 2 gezeichnet ist und die andere Hälfte durch eine Symmetrieachse 9 abgetrennt wird. Auf dem Oberteil des Transportfahrzeuges 1 ist die Verschiebewagenführung 3 fest angeordnet. Auf dem Unterteil 3.3 der Verschiebewagenführung sind die Laufrollen 2.1 des Verschiebewagens 2 aufgelegt. Der Verschiebewagen 2 ist in der Verschiebewagenführung 3 seitlich in beiden Richtungen verfahrbar und in den beiden Endlagen durch die Anschläge 3.1 und 3.2 gesichert. Eine obere Gegenführung 3.4 verhindert beim Be- oder Entladen, dass der Verschiebewagen kippt. Das obere Trum 6.1 der endlosen Transportketten des Kettenförderers 6 wird von der Kufe 2.2 des Verschiebewagens 2 gleitend getragen, es nimmt die Förderlast 7 vom ortsfesten Kettenförderer 8 auf, trägt sie während des Transportes und gibt sie bei einem zugewiesenen Uebergabeplatz wieder ab. In das untere Trum 6.2 greift in Kettenrad 5.1 der Brems-Blockiervorrichtung 4,5 ein. In einem Lagerbock 5.3 der fest mit dem Transportfahrzeug 1 verbunden ist, ist eine gemeinsame Welle 5.4 des Kettenrades 5.1 und einer Bremsscheibe 5.2 drehber gelagert. Zwischen dem Verschiebewagen 2 und der Bremsscheibe 5.2 ist eine Bremsvorrichtung 4 eingebaut, die wechselweise entweder die Förderketten des Kettenförderers 6 über die Bremsscheibe 5.2 und das Kettenrad 5.1 oder den Verschiebewagen abbremst und blockiert.

Die vorstehend beschriebene Uebergabeeinrichtung arbeitet wie folgt :

Das Transportfahrzeug 1 fährt beispielsweise mit der Förderlast 7 beladen zwischen die Uebergabestelle die aus zwei stationären Kettenförderern 8, 8.1 besteht. Die beiden stationären Kettenförderer 8, 8.1 liegen einander gegenüber und weisen gerade soviel Abstand auf, dass das Transportfahrzeug 1 mit dem aufgebauten Verschiebewagen 2 mit beidseitig genügendem Spielraum dazwischen fahren kann. Hat das Transportfahrzeug 1 die richtige Lage zwischen den stationären Kettenförderern 8, 8.1 und in der Fahrtrichtung erreicht, bremst es ab und bleibt stehen. Ein Motor des Kettenantriebes auf dem Verschiebewagen 2 bewegt nun bei blockierten Förderketten den Verschiebewagen 2 zusammen mit der Förderlast 7 zwischen die benachbarten Förderketten des stationären Uebernahme-Kettenförderers 8 um die Lücke zwischen dem Kettenförderer des Verschiebewagens 2 und dem stationären Kettenförderer 8 zu schliessen. Kurz bevor der seitliche Anschlag 3.2 erreicht ist, werden die Förderketten des Kettenförderers 6 freigegeben und der Verschiebewagen 2 abgebremst und blockiert. Da der Motor des Kettenantriebes 10 seinen Lauf nicht unterbricht, bewegen sich nun die Förderketten des Kettenförderers 6 mit der auf ihnen ruhenden Förderlast 7 in der gleichen Richtung, bis die Förderlast vom stationären Kettenförderer übernommen werden kann. Der Uebergang von der Verschiebewagenbewegung auf die Förderkettenbewegung, oder umgekehrt, wirkt sich auf die Förderlast 7 nicht aus. Die Förderlast bewegt sich über die ganze Strecke ohne Unterbruch in der gleichen konstanten Geschwindigkeit in der gleicher Richtung weiter. Durch die Ueberbrückung der Uebergabelücke zwischen dem stationären Kettenförderer und dem auf dem Verschiebewagen 2 angeordneten Kettenförderer 6 ist es möglich Förderlasten mit z. B. runder Auflagefläche zu transportieren, ohne dass die Förderlast 7 bei der Uebergabe oder bei der Uebernahme Kippbewegungen ausführt.

Ist das Transportfahrzeug 1 für den Weitertransport zu einer anderen Uebergabestelle bestimmt, wird die Weiterfahrt sofort aufgenommen, sobald der Verschiebewagen 2 durch die direkt eingeleitete Rückfahrbewegung die Mittellage erreicht hat und blockiert ist.

Ist das Transportfahrzeug 1 für die Aufnahme einer neuen Förderlast bestimmt, fährt der Verschiebewagen 2 ohne Unterbruch auf die andere Seite des Transportfahrzeuges 1 um vom gegenüberliegenden, stationären Kettenförderer 8.1 eine neue Förderlast zu übernehmen. Der Motor des Kettenantriebes 10 auf dem Verschiebewagen 2 dreht zu diesem Zweck in der Gegenrichtung und bewegt bei blockierten Förderketten des Kettenförderers den Verschiebewagen 2 bis zum Anschlag 3.1 auf der gegenüberliegenden Seite. Der Verschiebewagen 2 fährt somit zwischen die benachbarten Förderketten des gegenüberliegenden stationären Uebergabe-Kettenförderers 8.1 und schliesst auf dieser Seite die Lücke zwischen den beiden Einheiten. Ist der Anschlag 3.1 erreicht, werden die Förderketten des Kettenförderers 6 freigegeben und der Verschiebewagen 2 abgebremst und blockiert. Die Drehrichtung des Kettenantriebes 10 wird nun gewechselt, damit die vom stationären Uebergabe-Kettenförderer 8.1 in Richtung Transportfahrzeug 1 bewegte Förderlast 7 übernommen werden kann. Befindet sich die Förderlast 7 ungefähr in der Mitte des Verschiebewagens 2 wird die Blockierung des Verschiebewagens 2 gelöst und die Förderketten des Kettenförderers des Verschiebewagens blockiert. Die Förderlast 7 wird nun ohne Geschwindigkeitsänderung zusammen mit dem Verschiebewagen 2 bis in die markierte Mittellage des Transportfahrzeuges 1 bewegt. In dieser Stellung wird auch der Verschiebewagen 2 blockiert und das Transportfahrzeug 1 ist für die Weiterfahrt bereit.

Im Rahmen der Erfindung sind verschiedene Ausführungsvarianten möglich. Anstelle eines Kettenförderers könnte beispielsweise auch ein Bandförderer auf dem Verschiebewagen des Transportfahrzeuges angeordnet werden.

## Ansprüche

1. Uebergabeeinrichtung für Paletten und ähnliche Stückgüter, zwischen einem stationären Kettenförderer (8, 8.1) und einer Fördereinrichtung mit insbesondere rechtwinklig zur Förderrichtung des stationären Kettenförderers (8, 8.1) verlaufenden Förderbahn, wobei die Uebergabe mittels eines auf einem Transportfahrzeug (1) angeordneten, quer zur Förderbahn der Fördereinrichtung begrenzt verfahrbaren, schienengebundenen Verschiebewagens (2) erfolgt, dadurch gekennzeichnet, dass der Verschiebewagen (2) auf einem schienenfreien Transportfahrzeug (1) der Fördereinrichtung angeordnet ist, dass mindestens ein Förderorgan (6) des Verschiebewagens (2) auf etwa gleicher Förderhöhe wie die Ketten des stationären Kettenförderers (8, 8.1) zwischen benachbarte Förderketten desselben verfahrbar ist, und dass mittels einer auf dem Transportfahrzeug (1) angeordneten Brems-Blockiervorrichtung (4, 5) eine starre Blockierverbindung wechselweise zwischen dem Transportfahrzeug (1) und dem Verschiebewagen (2) bzw. zwischen dem Transportfahrzeug (1) und dem Förderorgan (6) des Verschiebewagens (2) hergestellt ist.

2. Uebergabeeinrichtung nach Anspruch 1, dadurch gekennzeichnet, dass das Förderorgan des Verschiebewagens (2) ein Kettenförderer (6) ist.

3. Uebergabeeinrichtung nach Anspruch 1, dadurch gekennzeichnet, dass mittels der Brems-Blockiervorrichtung (4, 5) im stromlosen Zustand die Blockierverbindung zwischen dem Transportfahrzeug (1) und dem Verschiebewagen (2) hergestellt ist, und dass die Brems-Blockiervorrichtung (4, 5) für den Betrieb elektromagnetisch lüftbar ist.

## Claims

1. Transfer arrangement for pallets and similar objects between a stationary chain conveyor (8, 8.1) and a conveyor device having a conveyor track extending especially perpendicular to the direction of conveying of the stationary chain conveyor (8, 8.1) wherein the load transfer is accomplished by means of a rail-bound displacement carriage (2) which is arranged upon a transport vehicle (1) to be moved within a predetermined limited extent perpendicular to the conveyor track of the conveyor device, characterised thereby, that the displacement carriage (2) is arranged upon a no-rail transport vehicle (1) of the conveyor device, that at least one conveyor element (6) of the displacement carriage (2) is arranged at approximately the same lifting height as the chains of the stationary chain conveyor (8, 8.1) to be movable between neighbouring conveyor chains of the stationary chain conveyor (8, 8.1) and that by means of a brake-blocking device (4, 5) arranged upon the transport vehicle (1) a rigid blocking connection is established alternately between the transport vehicle (1) and the displacement carriage (2) as well as between the transport vehicle (1) and the conveyor element (6) of the displacement carriage (2).

2. Transfer arrangement as defined in claim 1, characterised thereby, that the conveyor element of the displacement carriage (2) is a chain conveyor (6).

3. Transfer arrangement as defined in claim 1, characterised thereby, that by means of the brake-blocking unit (4, 5) in its currentless state, the blocking connection between the transport vehicle (1) and the displacement carriage (2) is established and that said brake-blocking unit (4, 5) is electromagnetically releasable for operation.

## Revendications

1. Dispositif de transfert de palettes et d'objets analogues, entre un transporteur stationnaire à chaîne (8, 8.1) et un dispositif de transport comportant en particulier un chemin de transport s'étendant perpendiculairement au sens de transport du transporteur stationnaire à chaîne (8, 8.1), dans lequel le transfert est effectué au moyen d'un chariot de translation (2) monté sur des rails, apte à être déplacé de façon limitée dans un sens perpendiculaire au chemin de transport et disposé sur un véhicule de transport, caractérisé en ce que le chariot de translation (2) est disposé sur un véhicule de transport (1) non monté sur des rails, en ce qu'au moins un organe de transport (6) du chariot de translation (2) est apte à être déplacé à une hauteur de transport sensiblement égale à celle des chaînes du transporteur stationnaire à chaîne (8, 8.1) entre les chaînes de transport de ce dernier qui lui sont voisines, et en ce qu'au moyen d'un dispositif de freinage et de blocage (4, 5) monté sur le véhicule de transport (1) une liaison rigide de blocage est alternativement établie entre le véhicule de transport (1) et le chariot de translation (2) et entre le véhicule de transport (1) et l'organe de transport (6) du chariot de translation (2).

2. Dispositif de transfert selon la revendication 1, caractérisé en ce que l'organe de transport du chariot de translation (2) est un transporteur à chaîne (6).

3. Dispositif de transfert selon la revendication 1, caractérisé en ce que la liaison de blocage entre le véhicule de transport (1) et le chariot de translation (2) est établie au moyen du dispositif de freinage et de blocage (4, 5) en condition d'absence de courant, et en ce que le dispositif de freinage et de blocage (4, 5) peut être libéré électromagnétiquement en vue du fonctionnement.

## Fig.1

## Fig.2

# Fig.3